# DEMANDE DE BREVET EUROPEEN

(11) **EP 0 780 557 A1**
(43) Date de publication de la demande: **25.06.1997**
(21) Numéro de dépôt: 96402810.4
(22) Date de dépôt: 19.12.1996
(51) Int. Cl.: F02C 7/262, F02C 7/268

(54) **Système d'aide au Rédemarrage des moteurs apres perte totale de motorisation**

(30) Priorité: 20.12.1995 FR 9515119
(71) Demandeur: SOCIETE NATIONALE D'ETUDE ET DE CONSTRUCTION DE MOTEURS D'AVIATION Snecma, F-75015 Paris (FR)
(72) Inventeur: Mouton, Pierre, 91350 Grigny (FR)

(57) **Abrégé**

Système d'aide au redémarrage d'au moins un moteur (1) d'un avion en vol, en cas de perte totale de motorisation. L'avion comporte un circuit hydraulique (5) pour les servo-commandes (6), normalement alimenté par une pompe principale (4) entraînée par le moteur (1), et une pompe de secours (16) entraînée par une turbine à air (19) sous pression dynamique qui est déployée à partir de fuselage en cas de perte de motorisation de l'avion. L'énergie hydraulique excédentaire de la pompe de secours (16) sert à entraîner la pompe principale (4) qui sera d'un type réversible et qui fonctionne en moteur, afin d'augmenter la vitesse d'autorotation du moteur éteint (1) et faciliter le réallumage de ce dernier, même à faible vitesse de l'avion

## Description

La présente invention concerne un système d'aide au redémarrage d'au moins un moteur éteint d'un avion en vol, notamment en cas de perte totale de motorisation dudit avion.

L'arrêt en vol d'un moteur sur un avion multimoteur constitue une situation contraignante, mais qui n'est pas critique pour la sécurité du vol, lorsque le redémarrage du moteur arrêté n'a pu être obtenu. Le seul risque réel, surtout sur un avion bimoteur, est celui associé à un déroutement de l'avion. Dans ces conditions, le réussite du redémarrage en vol a une influence certaine sur les facteurs à caractère économique, comme le déroutement de l'avion ou la perte d'altitude. Il faut signaler que les conditions de redémarrage, après l'arrêt d'un seul moteur, sont au niveau optimum, si l'on dispose du démarreur, de la capacité entière des systèmes d'allumage, d'alimentation en carburant et de l'ensemble des fonctions essentielles de l'avion, y compris l'ensemble des indications nécessaires dans le poste de pilotage et enfin d'un équipage en pleine possession de ses moyens.

La situation n'est plus la même en cas de perte totale de la motorisation de l'avion. Ici la réussite ou la non réussite du redémarrage des moteurs, ou au moins d'un moteur, permet d'éviter ou de subir un accident. La non remise en fonctionnement des moteurs peut conduire à une situation catastrophique, car l'absence complète de motorisation va priver l'avion de sa poussée, de ses générateurs électriques, hydrauliques et pneumatiques. Le groupe auxiliaire de puissance peut, lui aussi, être en panne, puisque l'avion peut décoller, lorsque ce groupe auxiliaire est hors-service. Dans une telle situation, la seule possibilité de réallumage est d'utiliser l'autorotation du moteur.

Cependant, les turboréacteurs modernes à grand taux de dilution possèdent un domaine de vol réduit dans lequel le réallumage du moteur en autorotation est possible, par rapport aux moteurs disposant d'un faible taux de dilution.

Pour obtenir un régime d'autorotation suffisant, afin de permettre le redémarrage d'un moteur moderne, il est donc nécessaire d'augmenter la vitesse de l'avion.

Cette disposition est irréaliste durant la période d'approche au sol avec les moteurs éteints. Il y a donc un risque d'accident, si le pilote ne peut ou attend trop longtemps pour déclencher la procédure de redémarrage durant la période de ralentissement du rotor vers sa vitesse d'autorotation, laquelle est en outre trop faible pour permettre le réallumage, ou lorsque le pilote est obligé d'attendre pour des raisons d'environnement.

Dans l'état de la technique, il est connu d'utiliser une turbine à air sous pression dynamique normalement disposée dans le fuselage de l'avion, pour alimenter en énergie hydraulique les systèmes de commande de vol de l'avion, en cas de perte de motorisation, cette énergie hydraulique étant normalement fournie par une pompe principale entraînée par les moteurs de l'avion.

Le but de la présente invention est de proposer un système qui permette d'obtenir un régime stabilisé d'autorotation du moteur éteint qui soit suffisant pour permettre le redémarrage de ce moteur même, si l'avion évolue à une vitesse de vol réduite correspondant à un taux de descente minimum.

L'invention atteint son but par le fait qu'on utilise l'excédent d'énergie hydraulique fournie par la turbine à air, lorsque le vol est stabilisé, pour augmenter le régime d'autorotation du moteur éteint que l'on veut redémarrer.

La présente invention concerne donc un système d'aide au redémarrage d'au moins un moteur éteint d'un avion en vol par autorotation dudit moteur, notamment en cas de perte totale de motorisation dudit avion, ledit avion comportant un circuit hydraulique pour les servo-commandes, ledit circuit étant alimenté en fluide sous pression, normalement par une pompe principale entraînée par ledit moteur, et par une pompe de secours entraînée par une turbine à air sous pression dynamique déployée à partir du fuselage de l'avion en cas de perte de motorisation de l'avion, lesdites pompes étant reliées au réservoir de fluide par des conduites d'alimentation et audit circuit par des conduites de délivrance.

Selon l'invention ce système est caractérisé par le fait que la pompe principale est du type réversible, et par le fait qu'il est prévu des moyens pour faire fonctionner ladite pompe principale comme moteur hydraulique alimenté en énergie hydraulique par la pompe de secours et permettant d'augmenter la vitesse d'autorotation dudit moteur.

Lesdits moyens comportent une première dérivation interposée entre la conduite de délivrance de la pompe de secours et la conduite d'alimentation de la pompe principale, une seconde dérivation entre la conduite de délivrance de la pompe principale et un circuit de retour vers le réservoir,
un premier sélecteur pour alimenter sélectivement la pompe principale en fluide à partir du réservoir ou à partir de la première dérivation, et
un deuxième sélecteur pour relier sélectivement la conduite de délivrance de la pompe principale au circuit hydraulique des servo-commandes ou à la deuxième dérivation.

Il est prévu en outre des distributeurs dans la première dérivation et la seconde dérivation.

D'autres avantages et caractéristiques de l'invention ressortiront à la lecture de la description suivante faite à titre d'exemple et en référence aux dessins annexés dans lesquels :
la figure 1 représente schématiquement le circuit hydraulique qui assure l'alimentation en fluide des servo-commandes de l'avion et l'entraînement mécanique de la pompe principale par un moteur, lorsque ce moteur est en fonctionnement, et
la figure 2 représente le même circuit hydraulique et le même entraînement mécanique, mais dans une disposition qui correspond à la perte totale de motorisation de l'avion, et à l'utilisation de l'énergie hydraulique excédentaire de la pompe de secours pour augmenter la vitesse d'autorotation du moteur.

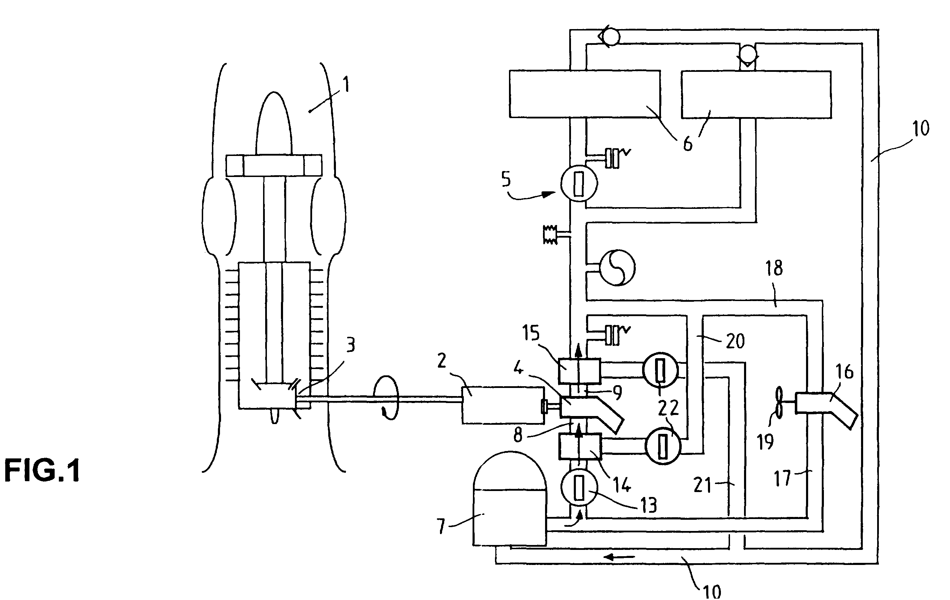

Sur la figure 1 on a représenté par la référence 1 un turboréacteur d'avion qui, en fonctionnement normal, entraîne une chaîne cinématique 2 par le biais d'une prise de mouvement 3. La chaîne cinématique 2 entraîne une pompe hydraulique principale 4 qui alimente en fluide sous pression le circuit hydraulique 5 des servo-commandes 6 de l'avion, en aspirant le fluide contenu dans un réservoir 7 par une conduite d'alimentation 8 et en refoulant le fluide sous pression par une conduite de délivrance 9 vers le circuit 5. Le fluide sous pression qui a alimenté les servo-commandes 6 revient vers le réservoir 7 par une conduite de retour 10. Les références 11 et 12 représentent des clapets anti-retour disposés dans les canalisations du circuit hydraulique 5 en aval des servo-commandes 6.

Entre le réservoir 7 et la pompe principale 4, le fluide traverse une vanne coupe-feu 13 et un premier sélecteur 14, qui dans la position de fonctionnement normal représentée sur la figure 1 met en communication la pompe principale 4 avec le réservoir.

A la sortie de la pompe principale 4, il est prévu un deuxième sélecteur 15 qui, en position de fonctionnement normal du moteur 1 met en communication la pompe principale 4 avec le circuit hydraulique 5.

Une pompe de secours 16, aspirant du fluide dans le réservoir 7 par une conduite d'alimentation 17 et le refoulant sous pression vers le circuit hydraulique 5 par une conduite de délivrance 18, est susceptible d'être entraînée par une turbine à air 19 sous pression dynamique qui loge dans le fuselage de l'avion et qui se déploie automatiquement en cas de perte totale de motorisation de l'avion. Dans cette situation critique de perte de motorisation de l'avion, le circuit hydraulique 5 reçoit du fluide sous pression de la pompe de secours 16, afin de permettre le fonctionnement normal des servo-commandes 6, grâce à l'énergie fournie par la turbine à air 19.

Ainsi qu'on le voit sur la figure 1, une première dérivation 20 relie la conduite de délivrance 18 de la pompe de secours 16 au premier sélecteur 14, ce dernier pouvant prendre une deuxième position dans laquelle la pompe principale 4 est en communication avec la première dérivation 20. Une deuxième dérivation 21 relie le deuxième sélecteur 15 à la conduite de retour 10 vers le réservoir 7, le deuxième sélecteur 15 pouvant prendre une deuxième position dans laquelle la pompe principale 4 est en communication avec la deuxième dérivation 21. Un distributeur 22 obture la première dérivation 20 et la deuxième dérivation 21, lorsque le moteur 1 est en fonctionnement.

Lorsque le moteur 1 est en fonctionnement, le circuit hydraulique est alimenté par la pompe principale 4. Les dérivations 20 et 21 sont obturées par le distributeur 22, les sélecteurs 14 et 15 établissant la circulation de fluide entre le réservoir 4 et le circuit 5 via la pompe principale 4. La turbine à air 19 est alors rentrée dans le fuselage de l'avion.

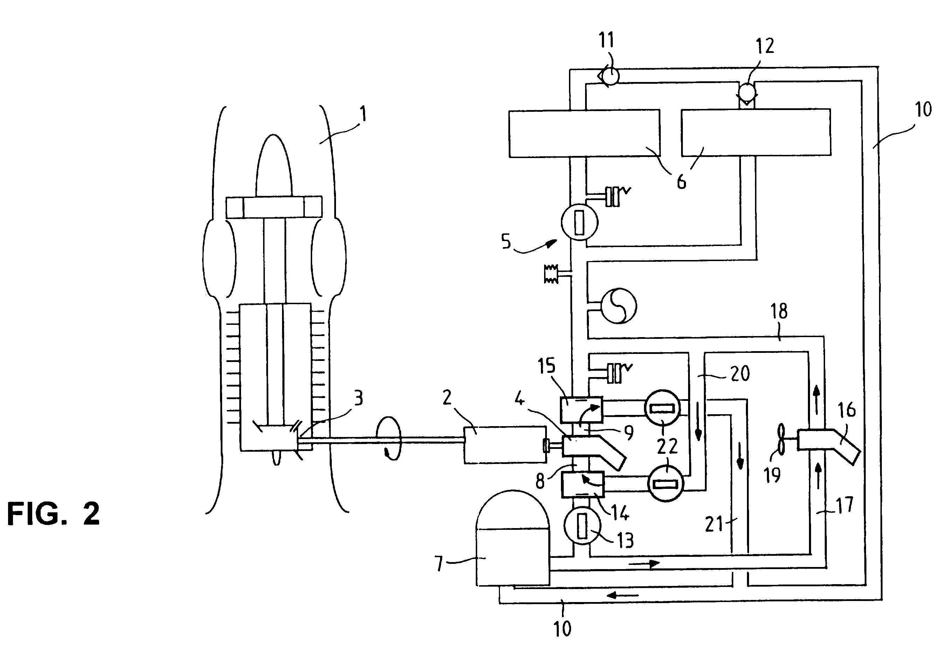

Lorsque les moteurs sont tous éteints, la turbine à air 19 se déploie automatiquement et entraîne la pompe de secours 16. Le sélecteur 14 obture la conduite provenant du réservoir 7 et met en communication la première dérivation 20 avec la conduite d'alimentation 8 de la pompe principale 4. Le sélecteur 15 obture la conduite de délivrance 9 et met en communication la sortie de la pompe principale 4 avec la deuxième dérivation 21. L'énergie hydraulique produite par la pompe de secours 16 permet d'alimenter les systèmes de commande de vol de l'avion. Lorsque le vol est stabilisé, c'est-à-dire lorsque les gouvernes sont stables, la pompe de secours 16 délivre un excédent d'énergie hydraulique. A ce stade, on peut commander le distributeur 22, afin d'alimenter la pompe principale 4 en fluide sous pression issu de la pompe de secours 16, la sortie de la pompe principale 4 étant alors reliée au réservoir 7 via le deuxième sélecteur 15, la deuxième dérivation 21 et le circuit de retour 10, ainsi que cela est représenté sur la figure 2.

La pompe principale 4, du type réversible, fonctionne alors comme un moteur hydraulique et transmet sa puissance par la chaîne cinématique 3 à la prise de mouvement 2 du moteur 1, ce qui permet d'élever sensiblement la vitesse d'autorotation du moteur 1, afin que le moteur 1 atteigne une vitesse de rotation située dans une plage permettant le réallumage du moteur.

Il est à noter que sur un Airbus A320 équipé du CFM 56-5 une puissance hydraulique de 6 KW permet d'augmenter de 6% la vitesse de rotation du corps haute pression du moteur 1, ce qui équivaut à une vitesse d'autorotation correspondant à une augmentation de vitesse de l'avion de 60 noeuds environ.

## Revendications

1. Système d'aide au redémarrage d'au moins un moteur (1) éteint d'un avion en vol par autorotation dudit moteur (1), notamment en cas de perte totale de motorisation dudit avion, ledit avion comportant un circuit hydraulique (5) pour les servo-commandes (6), ledit circuit (5) étant alimenté en fluide sous pression, normalement par une pompe principale (4) entraînée par ledit moteur (1), et par une pompe de secours (16) entraînée par une turbine à air (19) sous pression dynamique déployée à partir du fuselage de l'avion en cas de perte de motorisation de l'avion, lesdites pompes (4, 16) étant reliées au réservoir (7) de fluide par des conduites d'alimentation (8, 17) et audit circuit (5) par des conduites de délivrance (9, 18), caractérisé par le fait que la pompe principale (4) est du type réversible, et par le fait qu'il est prévu des moyens (14, 15, 20, 21, 22) pour faire fonctionner ladite pompe principale (4) comme moteur hydraulique alimenté en énergie hydraulique par la pompe de secours (16) et permettant d'augmenter la vitesse d'autorotation dudit moteur (1).

2. Système selon la revendication 1, caractérisé par le fait que lesdits moyens comportent une première dérivation (20) interposée entre la conduite de délivrance (18) de la pompe de secours (16) et la conduite d'alimentation (8) de la pompe principale (4), une seconde dérivation (21) entre la conduite de délivrance (9) de la pompe principale (4) et un circuit de retour (10) vers le réservoir (7),
un premier sélecteur (14) pour alimenter sélectivement la pompe principale (4) en fluide à partir du réservoir (7) ou à partir de la première dérivation (20), et
un deuxième sélecteur(15) pour relier sélectivement la conduite de délivrance (9) de la pompe principale (4) au circuit hydraulique (5) des servo-commandes (6) ou à la deuxième dérivation (21).

3. Système selon l'une des revendications 1 ou 2, caractérisé par le fait qu'il est prévu en outre des distributeurs (22) dans la première dérivation (20) et la seconde dérivation (21).
